# EUROPÄISCHE PATENTSCHRIFT

(11) **EP 1 591 319 B1**
(45) Veröffentlichungstag und Bekanntmachung des Hinweises auf die Patenterteilung: **15.04.2009**
(21) Anmeldenummer: 05001074.3
(22) Anmeldetag: 20.01.2005
(51) Int. Cl.: B60R 13/04

(54) **Schwellerverkleidung für ein Fahrzeug**
Side sill for a vehicle
Longeron pour véhicule

(30) Priorität: 28.04.2004 DE 102004020925
(43) Veröffentlichungstag der Anmeldung: 02.11.2005
(73) Patentinhaber: Dr. Ing. h.c. F. Porsche Aktiengesellschaft, 70435 Stuttgart (DE)
(72) Erfinder: Rijsbergen, Markus, 71229 Leonberg (DE); Grammer, Martin, 71640 Ludwigsburg (DE)

(56) Entgegenhaltungen:
- EP-A- 1 197 393
- EP-A- 1 375 255
- FR-A- 2 726 519
- US-A- 6 030 030
- US-B1- 6 276 109

## Beschreibung

Die Erfindung betrifft eine Schwellerverkleidung für ein Fahrzeug gem. dem Oberbegriff des Patentanspruchs 1.

Aus der GB 2 142 594 A geht eine aus Kunststoff gefertigte Schwellerverkleidung für ein Fahrzeug hervor, die an einem oberen und einem unteren Randbereich über Klipse an angrenzenden Trägerteilen der Aufbaustruktur in Lage gehalten ist. Jeder Klips stützt sich mit einem Kopfabschnitt an der Außenseite der Schwellerverkleidung ab und ragt mit einem angrenzenden Schaftabschnitt durch Öffnungen der Schwellerverkleidung und des Trägerteils hindurch. Dieser Anordnung haftet der Nachteil an, dass eine Demontage der Schwellerverkleidung nicht ohne Beschädigung bzw. Zerstörung der Klipse und ggf. der Schwellerverkleidung möglich ist. Teile der beschädigten Klipse können im Schweller verbleiben und störende Geräusch im Fahrbetrieb verursachen. Darüber hinaus befinden sich die Kopfabschnitte der Klipse in einem sichtbaren Bereich, was optisch störend wirkt.

Die US-B1-6,276,109 zeigt eine Schwellerverkleidung für ein Fahrzeug, die außenseitig auf ein angrenzendes Trägerteil der Aufbaustruktur aufgesetzt und in einem oberen und einem unteren Randbereich örtlich mit dem Trägerteil verbunden ist, wobei zur Festlegung des oberen Randbereiches der Schwellerverkleidung beabstandet angeordnete Klipse vorgesehen sind.

Bei dieser Anordnung ist die Schwellerverkleidung in ihrer Einbaulage mit ihrem oberen Randabschnitt an einem vertikal ausgerichteten Wandabschnitt des Trägerteils herangeführt, wobei in Öffnungen dieses vertikalen Wandabschnitts endseitige Schaftabschnitte von horizontal ausgerichteten, an der Schwellerverkleidung vormontierten Klipse eingesetzt sind. Über die Demontage der Schwellerverkleidung ist nichts ausgesagt.

Aufgabe der Erfindung ist es, eine Klipsbefestigung für eine Schwellerverkleidung eines Fahrzeuges so weiterzubilden, dass einerseits eine einfache Montage mit einem sicheren Halt in Einbaulage gewährleistet ist und dass andererseits eine beschädigungsfreie Demontage der Schwellerverkleidung und der Klipse erzielbar ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Ausgestaltung der Schwellerverkleidung und der Klipse eine einfache sichere Montage mit gutem Halt in Einbaulage sowie eine beschädigungsfreie Demontage der Schwellerverkleidung und der Klipse ohne Hilfswerkzeuge erzielt wird. Durch die Anordnung eines nach innen gerichteten Absatzes an der feststehenden Aufbaustruktur lässt sich die Schwellerverkleidung von unten her an die Aufbaustruktur heranführen. Die an der Schwellerverkleidung vormontierten, nach oben hin vorstehenden Klipse gewährleisten eine einfache Montage der Schwellerverkleidung. Die in Fahrzeuglängsrichtung definiert verschiebbaren Klipse ermöglichen einen einfachen Toleranzausgleich. Durch die Anordnung von örtlich nach innen abgestellten Haltelaschen am oberen Rand der Schwellerverkleidung wird eine verdeckte Anordnung der Klipse in Einbaulage erzielt, was aus optischen Gründen vorteilhaft ist. Die Klipse lassen sich seitlich durch einseitig offene Einführöffnungen in einfacher Weise in die Haltelaschen einsetzen. An der Oberseite der Haltelasche vorgesehene Führungsstege fixieren die Klipse in Einbaulage in Fahrzeugquerrichtung.

Jeder Klips stützt sich mit einem rechtwinkelig zum Schaftabschnitt verlaufenden plattenförmigen Stützabschnitt an der Oberseite des Haltesteges und mit einem etwa parallel dazu verlaufenden Kopfabschnitt an der Unterseite des Haltesteges ab. Der Stützabschnitt ist dabei relativ steif ausgebildet, wogegen der Kopfabschnitt bei einer Krafteinwirkung definiert deformierbar ausgebildet ist. Der deformierbare Kopfabschnitt und die einseitig offene Einführöffnung an der Haltelasche bewirken, dass die Schwellerverkleidung nach Lösen der unteren Schraubbefestigung durch eine nach unten bzw. nach außen gerichtete Verschiebebewegung seitlich von den am Trägerteil der Aufbaustruktur verankerten Klipsen ausknöpfbar ist. Dabei werden weder die Klipse noch die Schwellerverkleidung beschädigt.

Ein auf das freie Ende des Schaftabschnitts aufgesetzter sich an der Oberseite des Stützabschnitts und der Unterseite des Trägerteils anliegender Dichtring bewirkt eine funktionsgerechte Abdichtung zwischen dem Trocken- und dem Nassbereich. An der Unterseite des Kopfabschnitts vorgesehene, nach unten ragende Versteifungsrippen stützen sich innenseitig an der Schwellerverkleidung ab. Beiderseits des rechteckförmigen Kopfabschnitts weggeführte Flügel bewirken, dass sich der Klips bei Berührung mit der Schwellerverkleidung selbsttätig in die richtige Einbaulage dreht. Am Stützabschnitt und am Kopfabschnitt vorgesehene vorstehende Nasen bewirken, dass der Klips stets lagerichtig in die Schwellerverkleidung eingebaut wird.

Ein Ausführungsbeispiel der Erfindung ist in der Zeichnung dargestellt und wird im Folgenden näher erläutert.
Es zeigt
- Fig. 1: einen Personenkraftwagen in einer Seitenansicht,
- Fig. 2: eine perspektivische Ansicht von schräg vorne auf eine Schwellerverkleidung des Personenkraftwagens,
- Fig. 3: einen Schnitt längs der Linie III-III der Fig. 1 in größerer Darstellung,
- Fig. 4: eine Einzelheit X der Fig. 3 in größerer Darstellung,
- Fig. 5: eine Ansicht in Pfeilrichtung Y der Fig. 4 mit der Haltelasche und dem eingesetzten Klips,
- Fig. 6: eine Ansicht ähnlich Fig. 5, jedoch mit deformiertem Kopfabschnitt des Klipses,
- Fig. 7: eine perspektivische Ansicht auf eine zweite Ausführungsform eines Klipses zur Halterung einer Schwellerverkleidung.

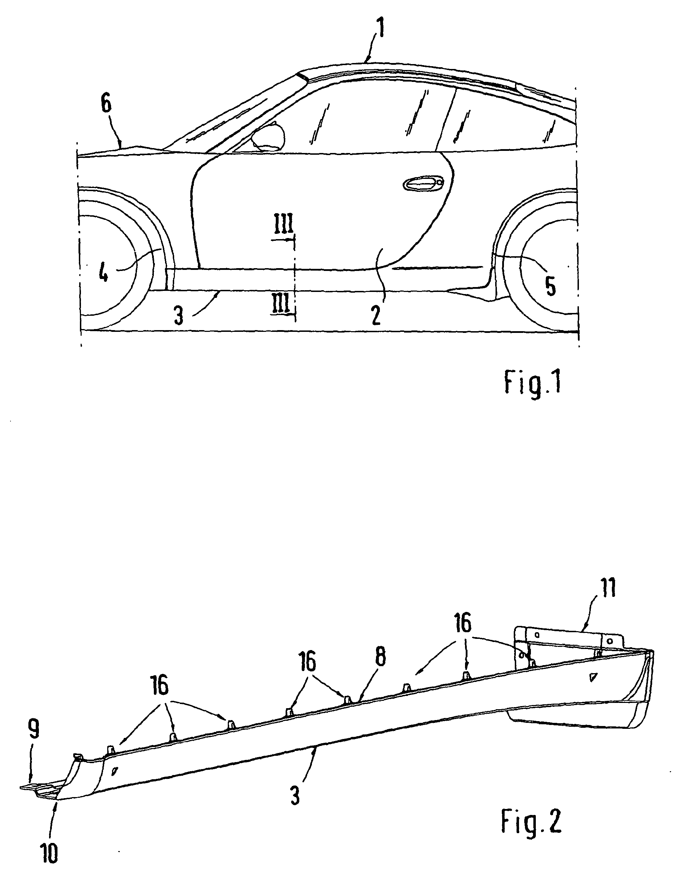

Fig. 1 zeigt ein durch einen Personenkraftwagen gebildetes Fahrzeug 1, das unterhalb einer seitlichen Tür 2 eine langgestreckte, aufgesetzte Schwellerverkleidung 3 aufweist. Die durch ein Kunststoffteil gebildete Schwellerverkleidung 3 erstreckt sich in Längsrichtung zwischen einem vorderen Radhaus 4 und einem hinteren Radhaus 5 einer Aufbaustruktur 6.

Die Schwellerverkleidung 3 ist außenseitig auf ein angrenzendes Trägerteil 7 der Aufbaustruktur 6 aufgesetzt und in einem oberen Randbereich 8 und in einem unteren Randbereich 9 örtlich an der feststehenden Aufbaustruktur 6 lösbar befestigt. Ferner sind der vordere Rand 10 und der hintere Rand 11 der Schwellerverkleidung 3 lösbar mit der Aufbaustruktur 6 verbunden. Das Trägerteil 7 wird im Ausführungsbeispiel durch ein Schwelleraußenblech gebildet, das außenseitig mit einem PVC-Unterbodenschutz versehen sein kann.

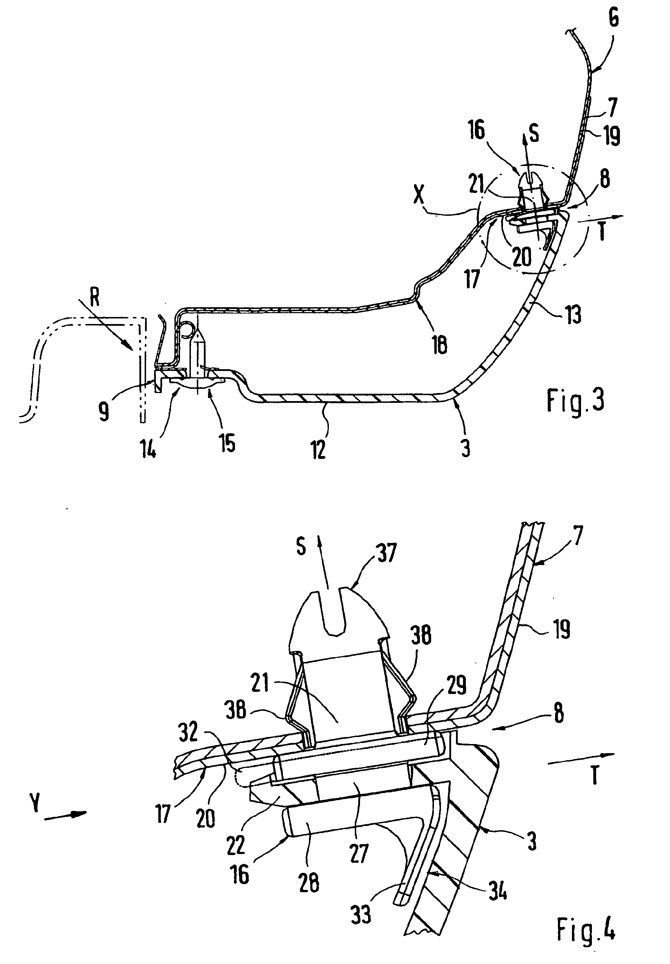

Im Querschnitt gesehen setzt sich die Schwellerverkleidung 3 aus einem unteren etwa horizontal ausgerichteten Abschnitt 12 und einem von diesem weggeführten nach oben hin ragenden gebogenen Abschnitt 13 zusammen. Das freie bereichsweise mit Aussteifungen versehene Ende 14 des unteren Abschnitts 12 der Schwellerverkleidung 3 ist örtlich mittels beabstandet angeordneter lösbarer Schraubverbindungen 15 an der Aufbaustruktur 6 in Lage gehalten (Fig. 3).

Zur Festlegung des oberen Randbereiches 9 der Schwellerverkleidung 3 sind mehrere mit Abstand zueinander angeordnete Klipse 16 vorgesehen. Erfindungsgemäß ist die Schwellerverkleidung 3 mit ihrem oberen Randbereich 8 an die Unterseite 17 eines nach innen gerichteten Absatzes 18 des Trägerteils 7 herangeführt und mit diesem über verdeckt angeordnete, sich in aufrechte Richtung erstreckende Klipse 16 verbunden. Zur Demontage der Schwellerverkleidung 3 ist deren oberer Randbereich 8 durch eine Verschiebebewegung in Pfeilrichtung R der Schwellerverkleidung 3 seitlich von den am Trägerteil 7 verankerten Klipsen 16 ausknöpfbar.

Der am Trägerteil 7 ausgebildete Absatz 18 umfasst einen an die aufrecht verlaufende Karosserieaußenhaut 19 anschließenden, etwa horizontal oder leicht schräg verlaufenden, nach innen gerichteten Wandabschnitt 20, an dem Öffnungen 21 zum Festlegen der Klipse 16 ausgebildet sind. Die Öffnungen 21 weisen im Ausführungsbeispiel einen kreisrunden Querschnitt auf. Die Klipse 16 sind an der Schwellerverkleidung 3 vormontiert, dergestalt, dass sie in Fahrzeugquerrichtung fixiert, in Fahrzeuglängsrichtung jedoch um ein definiertes Maß verschiebbar angeordnet sind (Toleranzausgleich in Fahrzeuglängsrichtung).

Zur Aufnahme der Klipse 16 sind am oberen Randbereich 8 der Schwellerverkleidung 3 örtlich nach innen abgestellte Haltelaschen 22 vorgesehen, die einstückig mit der Schwellerverkleidung 3 ausgebildet sind. In der Draufsicht gesehen sind die Haltelaschen 22 rechteckförmig, trapezförmig oder dgl. ausgebildet. Die Haltelaschen 22 sind etwa parallel zum Wandabschnitt 20 des Absatzes 18 ausgerichtet. Jede Haltelasche 22 weist eine Einführöffnung 23 zum seitlichen Einsetzen eines Klipses 16 auf. Die Einführöffnung 23 ist zum freien innenliegenden Ende 24 der Haltelasche 22 hin offen ausgebildet. Die Einführöffnung 23 ist in der Draufsicht gesehen U-förmig oder schlüssellochförmig ausgebildet. Ein etwa mittiger Klips der Schwellerverkleidung 3 ist in Fahrzeuglängsrichtung B-B fest angeordnet oder nur um ein geringes Maß in Längsrichtung verschiebbar und bildet einen Referenzpunkt für die Befestigung der Schwellerverkleidung 3. Sämtliche anderen Klipse hingegen sind in Fahrzeuglängsrichtung B-B verschiebbar, wobei die Größe der Verschiebbarkeit in Fahrzeuglängsrichtung gesehen bei den beiden endseitigen Klipsen 16 jeweils am größten ist. Die Verschiebbarkeit wird durch die konstruktive Ausgestaltung der Einführöffnung 23 gesteuert. In Fahrzeugquerrichtung A-A gesehen sind sämtliche Klipse 16 hinsichtlich ihrer Lage festgelegt, und zwar durch an der Oberseite der Haltelasche 22 angeordnete sich in Fahrzeuglängsrichtung erstreckende Führungsstege 25, die außenseitig an beiden längeren Längsseiten des Stützabschnitts 29 anliegen. Beide mit Abstand zueinander verlaufenden längsgerichteten Führungsstege 25 sind örtlich durch vorstehende Querstege 26 miteinander verbunden.

Jeder Klip 16 umfasst einen Schaftabschnitt 27, einen etwa rechtwinkelig zu einer Längsachse C-C des Schaftabschnitts 27 verlaufenden Kopfabschnitt 28 und einen parallel dazu mit Abstand verlaufenden Stützabschnitt 29. Der Kopfabschnitt 28 und der Stützabschnitt 29 sind im Ausführungsbeispiel plattenförmig ausgebildet und weisen in der Draufsicht gesehen eine Rechteckform auf, wobei sich die längeren Längsseiten in Einbaulage in Fahrzeuglängsrichtung B-B erstrecken. Der Kopfabschnitt 28 stützt sich mit seiner Oberseite an der Unterseite der Haltelasche 22 ab, wogegen der Stützabschnitt 29 an der Oberseite der Haltelasche 22 aufliegt. Am Kopfabschnitt 28 und am Stützabschnitt 29 sind außenseitig jeweils zwei mit Abstand zueinander angeordnete nach oben hin vorstehende Nockenbereiche 30, 31 ausgebildet, die in Fahrzeugquerrichtung verlaufen.

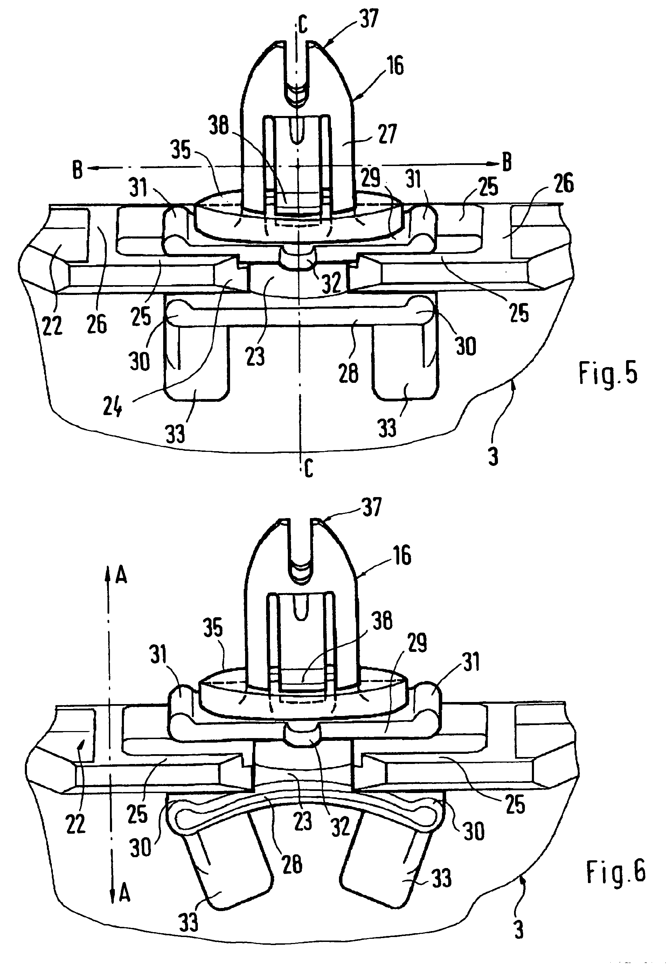

Der Stützabschnitt 29 jedes Klipses 16 ist relativ steif ausgebildet, wogegen der Kopfabschnitt 28 bei einer definierten Krafteinwirkung im gewissen Umfang deformierbar ist. Der äußere Führungssteg 25 wird durch einen durchgehenden nach oben ragenden Steg der Schwellerverkleidung 3 gebildet und erstreckt sich über die gesamte Länge der Schwellerverkleidung 3. Der innere Führungssteg 25 erstreckt sich lediglich im Bereich der Haltelasche 22 und ist durch die Einführöffnung 23 örtlich unterbrochen. In Einbaulage der Klipse 16 bildet der innere Führungssteg 25 einen Hinterschnitt für den eingesetzten Klips 16, das heißt, der innere Führungssteg 25 hält den Klips 16 in Fahrzeugquerrichtung fest. Nach Lösen der unteren Schraubverbindungen 15 wird durch eine nach unten bzw. nach außen gerichtete Krafteinwirkung in Richtung R auf das freie Ende 14 des unteren Randbereiches 9 der Schwellerverkleidung 3 der Kopfabschnitt 28 der Klipse 16 gem. Fig. 6 dergestalt deformiert, dass der innenliegende längsverlaufende Rand des Stützabschnitts 29 über den inneren Führungssteg 25 der Haltelasche 2 hinweggleitet und der obere Randbereich 8 der Schwellerverkleidung 3 zur Außenseite hin abziehbar ist. Damit der Klip 16 lagerichtig in die Einführöffnung 23 eingesetzt wird, ist an der der Schwellerverkleidung 3 abgekehrten Seite des Stützabschnitts 29 und/oder des Kopfabschnitts 28 eine vorstehende Nase 32 ausgebildet.

Zur Aussteifung jedes Klipses 16 in Einbaulage sind an der Unterseite des Kopfabschnitts 28 auf der der Schwellerabdeckung 3 zugewandten Seite ein oder mehrere nach unten ragende Versteifungsrippen 33 vorgesehen, die im Ausführungsbeispiel einen winkeligen Querschnitt aufweisen. Die Versteifungsrippen 33 verlaufen in Einbaulage mit geringem Abstand zu einer Innenkontur 34 der Schwellerabdeckung 3.

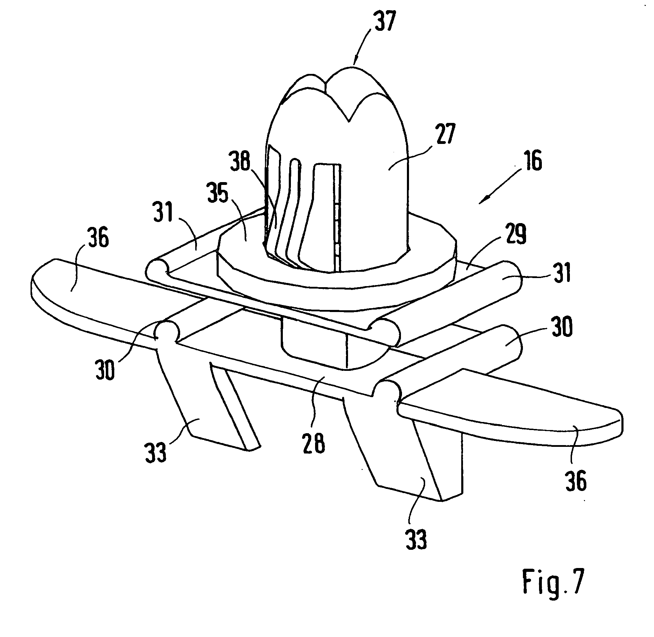

Um bei montierter Schwellerverkleidung 3 eine gute Abdichtung zur angrenzenden Aufbaustruktur 6 zu erzielen, ist auf das freie Ende des Schaftabschnitts 27 ein kreisringförmiger Dichtring 35 aufgesetzt, der an der Oberseite des Stützabschnitts 29 und an der Unterseite des Wandabschnitts 20 der Aufbaustruktur 6 aufliegt. An beiden kurzen Längsseiten des Kopfabschnitts 28 weggeführte seitliche Flügel 36 bewirken, dass der Klips 16 im Servicefall lagerichtig, das heißt fluchtend zur Schwellerverkleidung 3 verläuft. Durch die seitlichen Flügel 36 dreht sich der Klips 16 von alleine in die richtige Position (Fig. 7).

In Einbaulage ist das freie kalottenförmige Ende 37 durch die Öffnung 21 des Trägerteils 7 hindurchgeführt und zwei diametral am Schaftabschnitt 27 vorgesehene federnde Nasen 38 stützen sich an der Innenseite des Trägerteils 7 ab.

Die Montage der Schwellerabdeckung 3 erfolgt nach oben hin in Richtung S die Demontage nach außen zur Seite hin in Richtung T (siehe Fig. 3 und 4).

## Patentansprüche

1. Schwellerverkleidungsanordnung für ein Fahrzeug mit einem Trägerteil (7) der Aufbaustruktur (6) und einer Schwellerverkleidung (3), die außenseitig auf das angrenzende Trägerteil (7) aufgesetzt und in einem oberen und einem unteren Randbereich (8,9) örtlich mit dem Trägerteil (7) verbunden ist, wobei zur Festlegung des oberen Randbereiches (8) der Schwellerverkleidung (3) beabstandet angeordnete Klipse (16) vorgesehen sind, **dadurch gekennzeichnet,**
- **dass** die Schwellerverkleidung (3) mit ihrem oberen Randbereich (8) an die Unterseite (17) eines nach innen gerichteten Absatzes (18) des Trägerteiles (7) herangeführt und mit diesem über die verdeckt angeordnete, sich in aufrechter Richtung (C-C) erstreckende Klipse (16) verbunden ist,
- **dass** der am Trägerteil (7) ausgebildete Absatz (18) einen an die Karosserieaußenhaut (19) anschließenden, etwa horizontal oder leicht schräg verlaufenden nach innen gerichteten Wandabschnitt (20) umfasst, an dem Öffnungen (21) zum Festlegen der Klipse (16) angeordnet sind,
- **dass** am oberen Randbereich (8) der Schwellerverkleidung (3) örtlich nach innen abgestellte Haltelaschen (22) zur Aufnahme der Klipse (16) vorgesehen sind, die etwa parallel zum Wandabschnitt (20) des Absatzes (18) ausgerichtet sind,
- **dass** zur Demontage der Schwellerverkleidung (3) deren oberer Randbereich (8) durch eine Verschiebebewegung der Schwellerverkleidung (3) seitlich von den am Trägerteil (7) verankerten Klipsen (16) ausknöpfbar ist.

2. Schwellerverkleidungsanordnung nach Anspruch 1, **dadurch gekennzeichnet, dass** die Klipse (16) an der Schwellerverkleidung (3) vormontiert sind, dergestalt, dass sie in Fahrzeugquerrichtung (A-A) fixiert, jedoch in Fahrzeuglängsrichtung (B-B) um ein definiertes Maß verschiebbar sind.

3. Schwellerverkleidungsanordnung nach Anspruch 1, **dadurch gekennzeichnet, dass** jede Haltelasche (22) eine Einführöffnung (23) zum seitlichen Einsetzen eines Klipses (16) aufweist.

4. Schwetterverkteidungsanordnung nach Anspruch 3, **dadurch gekennzeichnet, dass** die Einführöffnung (23) in der Draufsicht gesehen U-förmig oder schlüssellochförmig ausgebildet ist.

5. Schwellerverkleidungsanordnung nach einem der vorhergehenden Ansprüche, **dadurch gekennzeichnet, dass** an der Oberseite der Haltelasche (22) nach oben vorstehende sich in Fahrzeuglängsrichtung erstreckende Führungsstege (25) angeordnet sind, die den vormontierten Klip (16) in Fahrzeugquerrichtung (A-A) fixieren.

6. Schwellerverkleidungsanordnung nach einem der vorhergehenden Ansprüche, **dadurch gekennzeichnet, dass** sich der Klips (16) mit einem rechtwinkelig zum Schaftabschnitt (27) verlaufenden plattenförmigen Stützabschnitt (29) an der Oberseite der Haltelasche (22) und mit einem etwa parallel dazu verlaufenden Kopfabschnitt (28) an der Unterseite der Haltelasche (22) abstützt.

7. Schwellerverkleidungsanordnung nach Anspruch 6, **dadurch gekennzeichnet, dass** der Stützabschnitt (29) in der Draufsicht gesehen rechteckförmig ausgebildet ist und an der dem Trägerteil (7) zugewandten Seite zwei beabstandete querverlaufende vorstehende Nockenbereiche (31) aufweist.

8. Schwetterverkteidungsanordnung nach Anspruch 6, **dadurch gekennzeichnet, dass** der Kopfabschnitt (28) rechteckförmig ausgebildet und auf der den Haltelaschen (22) zugewandten Seite zwei querverlaufende Nockenbereiche (30) aufweist.

9. Schwellerverkleidungsanordnung nach einem der Ansprüche 6 bis 8, **dadurch gekennzeichnet, dass** der Stützabschnitt (29) relativ steif ausgebildet ist, wogegen der Kopfabschnitt (28) bei einer Krafteinwirkung im gewissen Umfang deformierbar ausgebildet ist.

10. Schwellerverkleidungsanordnung nach einem der Ansprüch 6 bis 9, **dadurch gekennzeichnet, dass** auf das freie Ende des Schaftabschnitts (27) ein kreisringförmiger Dichtring (35) aufgesetzt ist, der an der Oberseite des Stützabschnitts (29) und der Unterseite des Wandabschnitts (20) unter Vorspannung aufliegt.

11. Schwellerverkleidungsanordnung nach einem der Ansprüche 6 bis 10, **dadurch gekennzeichnet, dass** an der Unterseite des Kopfabschnitts (28) auf der der Schwellerverkleidung (3) zugewandeten Seite nach unten ragende Versteifungsrippen (33) vorgesehen sind.

12. Schwellerverkleidungsanordnung nach einem der Ansprüch 8 bis 11, **dadurch gekennzeichnet, dass** vom rechteckförmigen Kopfabschnitt (28) des Klips (16) seitliche Flügel (36) weggeführt sind, die den Klips (16) bei Berührung mit der Schwellerverkleidung (3) selbsttätig in die richtige Einbaulage bewegen.

13. Schwellerverkleidungsanordnung nach einem der Ansprüche 6 bis 12, **dadurch gekennzeichnet, dass** an der der Schwellerverkleidung (3) abgekehrten Seite des Stützabschnitts (29) und/oder des Kopfabschnitts (28) eine vorstehende Nase (32) zur lagerichtigen Positionierung des Klips (16) ausgebildet ist.

14. Schwellerverkleidungsanordnung nach einem der vorhergehenden Ansprüche, **dadurch gekennzeichnet, dass** der untere Randbereich (9) der Schwellerverkleidung (3) durch lösbare Schraubverbindungen (15) an der Aufbaustruktur (6) festgelegt ist.

15. Schwellerverkleidungsanordnung nach Anspruch 14, **dadurch gekennzeichnet, dass** nach Lösen der unteren Schraubverbindungen (15) durch eine nach unten bzw. nach außen gerichtete Krafteinwirkung in Richtung (R) auf den unteren Randbereich (9) der Schwellerverkleidung (3) der Kopfabschnitt (28) der Klipse (16) dergestalt deformiert wird, dass der innenliegende längsverlaufende Rand des Stützabschnitts (29) über den inneren Führungssteg (25) der Haltelasche (22) hinweggleitet und der obere Randbereich (8) der Schwellerverkleidung (3) zur Außenseite hin abziehbar ist.

## Claims

1. Sill lining arrangement for a vehicle having a beam part (7) of the body structure (6) and having a sill lining (3) which is placed at the outside onto the adjoining beam part (7) and which is locally connected in an upper and a lower edge region (8,9) to the beam part (7), with clips (16) which are arranged spaced apart from one another being provided for fixing the upper edge region (8) of the sill lining (3), **characterized**
- **in that** the sill lining (3) extends with its upper edge region (8) into the vicinity of the underside (17) of an inwardly directed step (18) of the beam part (7) and is connected to said step (18) by means of the clips (16) which are arranged so as to be hidden and which extend in the upright direction (C-C),
- **in that** the step (18) which is formed on the beam part (7) comprises an inwardly directed wall section (20) which adjoins the body skin (19) and which runs approximately horizontally or in a slightly inclined fashion, on which wall section (20) are arranged openings (21) for fixing the clips (16),
- **in that** locally inwardly up-turned retaining lugs (22) for holding the clips (16) are provided at the upper edge region (8) of the sill lining (3), which retaining lugs (22) are aligned approximately parallel to the wall section (20) of the step (18),
- **in that**, to disassemble the sill lining (3), its upper edge region (8) can be unhooked laterally from the clips (16), which are anchored on the beam part (7), by means of a movement of the sill lining (3).

2. Sill lining arrangement according to Claim 1, **characterized in that** the clips (16) are pre-assembled on the sill lining (3) in such a way as to be fixed in the vehicle transverse direction (A-A) but so as to be movable in the vehicle longitudinal direction (B-B) to a defined extent.

3. Sill lining arrangement according to Claim 1, **characterized in that** each retaining lug (22) has an insertion opening (23) for the lateral insertion of a clip (16).

4. Sill lining arrangement according to Claim 3, **characterized in that** the insertion opening (23) is of U-shaped or keyhole-shaped design as viewed in plan view.

5. Sill lining arrangement according to one of the preceding claims, **characterized in that** upwardly projecting guide webs (25), which extend in the vehicle longitudinal direction, are arranged on the upper side of the retaining lug (22), which guide webs (25) fix the pre-assembled clip (16) in the vehicle transverse direction (A-A).

6. Sill lining arrangement according to one of the preceding claims, **characterized in that** the clip (16) is supported with a plate-shaped support section (29), which runs at right angles to the shank section (27), on the upper side of the retaining lug (22), and is supported with a head section (28), which runs approximately parallel to said support section (29), on the underside of the retaining lug (22).

7. Sill lining arrangement according to Claim 6, **characterized in that** the support section (29) is rectangular as viewed in plan view and has, on the side facing towards the beam part (7), two spaced-apart, transversely-running projecting cam regions (31).

8. Sill lining arrangement according to Claim 6, **characterized in that** the head section (28) is of rectangular design and has, on the side facing towards the retaining lugs (22), two transversely-running cam regions (30).

9. Sill lining arrangement according to one of Claims 6 to 8, **characterized in that** the support section (29) is of relatively rigid design, whereas the head section (28) is formed so as to be deformable to a certain extent under the action of force.

10. Sill lining arrangement according to one of Claims 6 to 9, **characterized in that** a circular-ring-shaped sealing ring (35) is placed onto the free end of the shank section (27), which sealing ring (25) bears under preload against the upper side of the support section (29) and the underside of the wall section (20).

11. Sill lining arrangement according to one of Claims 6 to 10, **characterized in that** downwardly projecting stiffening ribs (33) are provided on the underside of the head section (28), on the side facing towards the sill lining (3).

12. Sill lining arrangement according to one of Claims 8 to 11, **characterized in that** lateral vanes (36) extend away from the rectangular head section (28) of the clip (16), which vanes (36), as they come into contact with the sill lining (3), automatically move the clip (16) into the correct installation position.

13. Sill lining arrangement according to one of Claims 6 to 12, **characterized in that** a projecting lug (32) for the correct positioning of the clip (16) is formed on that side of the support section (29) and/or of the head section (28) which faces away from the sill lining (3).

14. Sill lining arrangement according to one of the preceding claims, **characterized in that** the lower edge region (9) of the sill lining (3) is fixed to the body structure (6) by means of detachable screw connections (15).

15. Sill lining arrangement according to Claim 14, **characterized in that,** after the detachment of the lower screw connections (15), by means of a downwardly and outwardly directed force action in the direction (R) of the lower edge region (9) of the sill lining (3), the head section (28) of the clip (16) is deformed in such a way that the inner, longitudinally-running edge of the support section (29) slides over the inner guide web (25) of the retaining lug (22) and the upper edge region (8) of the sill lining (3) can be pulled off in the direction of the outer side.

## Revendications

1. Agencement d'enjoliveur de bas de marche pour un véhicule comprenant une partie de support (7) de la structure de carrosserie (6) et un enjoliveur de bas de marche (3), qui est posé du côté extérieur sur la partie de support (7) adjacente et qui est connecté dans une partie de bord supérieure et une partie de bord inférieure (8, 9) localement à la partie de support (7), des clips espacés (16) étant prévus pour la fixation de la partie de bord supérieure (8) de l'enjoliveur de bas de marche (3), **caractérisé en ce que**
- l'enjoliveur de bas de marche (3), avec sa partie de bord supérieure (8), est rapproché du côté inférieur (17) d'un gradin (18) orienté vers l'intérieur de la partie de support (7) et est connecté avec celui-ci par le biais des clips (16) dissimulés, s'étendant dans la direction verticale (C-C),
- **en ce que** le gradin (18) réalisé sur la partie de support (7) comprend une portion de paroi (20) se raccordant au panneau extérieur de la carrosserie (19), orientée vers l'intérieur approximativement horizontalement ou s'étendant légèrement en biais, sur laquelle sont pratiquées des ouvertures (21) pour la fixation des clips (16),
- **en ce que** des pattes de fixation (22) orientées localement vers l'intérieur sont prévues sur la partie de bord supérieure (8) de l'enjoliveur de bas de marche (3) pour recevoir les clips (16), qui sont orientés approximativement parallèlement à la portion de paroi (20) du gradin (18),
- **en ce que** pour le démontage de l'enjoliveur de bas de marche (3), sa partie de bord supérieure (8) peut être déconnectée par un mouvement de glissement de l'enjoliveur de bas de marche (3) latéralement aux clips (16) ancrés à la partie de support (7).

2. Agencement d'enjoliveur de bas de marche selon la revendication 1, **caractérisé en ce que** les clips (16) sont prémontés sur l'enjoliveur de bas de marche (3), de telle sorte qu'ils soient fixés dans la direction transversale du véhicule (A-A), mais qu'ils puissent être déplacés d'une mesure définie dans la direction longitudinale du véhicule (B-B).

3. Agencement d'enjoliveur de bas de marche selon la revendication 1, **caractérisé en ce que** chaque patte de fixation (22) présente une ouverture d'insertion (23) pour l'insertion latérale d'un clip (16).

4. Agencement d'enjoliveur de bas de marche selon la revendication 3, **caractérisé en ce que** l'ouverture d'insertion (23) est réalisée en forme de U ou de trou de serrure en vue de dessus.

5. Agencement d'enjoliveur de bas de marche selon l'une quelconque des revendications précédentes, **caractérisé en ce que** des nervures de guidage (25) s'étendant dans la direction longitudinale du véhicule et saillant vers le haut sont disposées sur le côté supérieur de la patte de fixation (22), et fixent le clip prémonté (16) dans la direction transversale du véhicule (A-A).

6. Agencement d'enjoliveur de bas de marche selon l'une quelconque des revendications précédentes, **caractérisé en ce que** le clip (16) s'appuie avec une portion de support (29) en forme de plaque s'étendant à angle droit par rapport à la portion de tige (27) sur le côté supérieur de la patte de fixation (22) et avec une portion de tête (28) s'étendant approximativement parallèlement à celle-ci, sur le côté inférieur de la patte de fixation (22).

7. Agencement d'enjoliveur de bas de marche selon la revendication 6, **caractérisé en ce que** la portion de support (29) est réalisée avec une forme rectangulaire en vue de dessus et présente sur le côté tourné vers la partie de support (7) deux parties de came (31) espacées, saillantes et s'étendant transversalement.

8. Agencement d'enjoliveur de bas de marche selon la revendication 6, **caractérisé en ce que** la portion de tête (28) est réalisée avec une forme rectangulaire et présente sur le côté tourné vers les pattes de fixation (22) deux parties de came (30) s'étendant transversalement.

9. Agencement d'enjoliveur de bas de marche selon l'une quelconque des revendications 6 à 8, **caractérisé en ce que** la portion de support (29) est réalisée de manière relativement rigide, tandis que la portion de tête (28) est réalisée de manière à se déformer dans une certaine mesure en cas d'application de force.

10. Agencement d'enjoliveur de bas de marche selon l'une quelconque des revendications 6 à 9, **caractérisé en ce qu'**une bague d'étanchéité (35) de forme annulaire circulaire est posée sur l'extrémité libre de la portion de tige (27), et s'applique avec précontrainte sur le côté supérieur de la portion de support (29) et sur le côté inférieur de la portion de paroi (20).

11. Agencement d'enjoliveur de bas de marche selon l'une quelconque des revendications 6 à 10, **caractérisé en ce que** des nervures de renforcement (33) saillant vers le bas sont prévues sur le côté inférieur de la portion de tête (28), du côté tourné vers l'enjoliveur de bas de marche (3).

12. Agencement d'enjoliveur de bas de marche selon l'une quelconque des revendications 8 à 11, **caractérisé en ce que** des ailes (36) latérales sont guidées à l'écart de la portion de tête rectangulaire (28) du clip (16), lesquelles déplacent le clip (16) automatiquement dans la position de montage correcte lors du contact avec l'enjoliveur de bas de marche (3).

13. Agencement d'enjoliveur de bas de marche selon l'une quelconque des revendications 6 à 12, **caractérisé en ce qu'**un ergot saillant (32) est réalisé pour le positionnement correct du clip (16) au niveau du côté de la portion de support (29) et/ou de la portion de tête (28) tourné à l'opposé de l'enjoliveur de bas de marche (3).

14. Agencement d'enjoliveur de bas de marche selon l'une quelconque des revendications précédentes, **caractérisé en ce que** la partie de bord inférieure (9) de l'enjoliveur de bas de marche (3) est fixée à la structure de la carrosserie (6) par des connexions vissées détachables (15).

15. Agencement d'enjoliveur de bas de marche selon la revendication 14, **caractérisé en ce qu'**après le desserrage des connexions vissées inférieures (15) par l'application d'une force orientée vers le bas ou vers l'extérieur dans la direction (R) sur la partie de bord inférieure (9) de l'enjoliveur de bas de marche (3), la portion de tête (28) des clips (16) est déformée de telle sorte que le bord s'étendant longitudinalement à l'intérieur de la portion de support (29) glisse sur la nervure de guidage interne (25) de la patte de fixation (22) et que la partie de bord supérieure (8) de l'enjoliveur de bas de marche (3) puisse être retirée vers le côté extérieur.
